# EUROPEAN PATENT SPECIFICATION

(11) **EP 0 610 500 B1**
(45) Date of publication and mention of the grant of the patent: **28.01.1998**
(21) Application number: 92918704.5
(22) Date of filing: 04.09.1992
(51) Int. Cl.: E02F 9/16

(54) **CONSTRUCTION MACHINE**
BAUMASCHINE
ENGIN DE CHANTIER

(43) Date of publication of application: 17.08.1994
(73) Proprietor: KABUSHIKI KAISHA KOMATSU SEISAKUSHO, Minato-ku Tokyo 107 (JP)
(72) Inventor: SHINSEN, Mitsuhisa, Komatsu-shi, Ishikawa 923-03 (JP)
(74) Representative: Meissner, Peter E., Dipl.-Ing.
(86) International application number: JP9201133
(87) International publication number: WO9405865

(56) References cited:
- FR-A- 2 662 681
- JP-A- 1 198 929
- JP-A- 1 230 819
- JP-A- 3 244 781
- JP-U-51 102 122

## Description

### Field of the Invention

The present invention relates to a construction machine, more specifically, an operation room of a construction machine such as a power shovel which has a turning table.

### Related Background Art

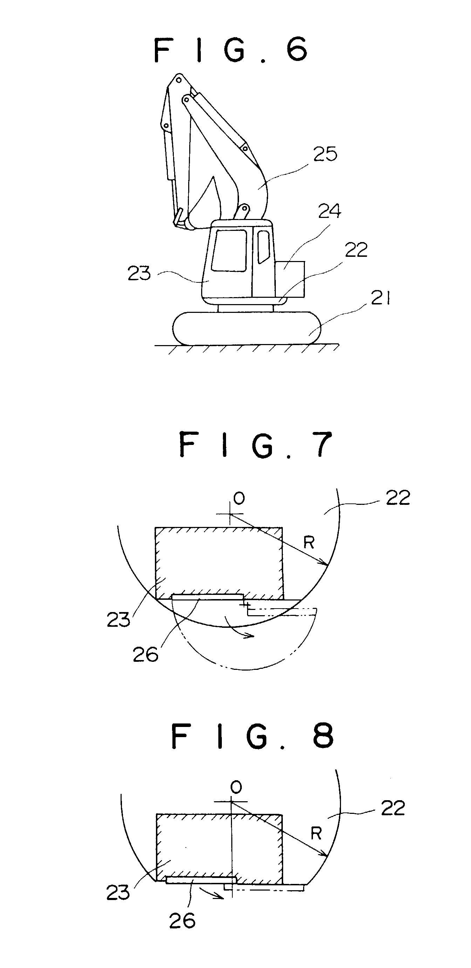

A hydraulic power shovel has a turning table 22 on a crawler 21 as shown, for example, in Fig. 6 and is provided with an operation room 23, an engine room 24 and a collapsible working machine 25. The straight-shaped operation room 23 installed on such a vehicle is located off the center of the turning table 22 as shown, for example, in Figs. 7 and 8, and a door 26 of this operation room 23 for accessing of an operator is adapted to be opened by turning it in an arrow direction as shown in Fig. 7 in case of a hinged type door and by sliding it up to a position shown with a 2-dotted broken line as shown in Fig. 8 in case of a slide type door. However, there has been a problem that, if the hinged type door is provided with a large-sized opening, the door comes out of the turning radius R of the upper turning body when the door is opened and fixed and may be damaged by an external obstacle during work and, in the case of the slide type door, rails and rollers to be used for sliding the door are protruded into the operation room whereby the internal space of the operation room is reduced. When the door is in the opened position, it is within the turning radius of the turning table.

### Disclosure of the Invention

An object of the present invention mace in view of the above-described problem is to prevent deviation of the door from its turning radius when the door is opened while reserving a size of the door opening and provide an operation room of a vehicle having an upper turning body which is capable of providing a large indoor space, thereby eliminating defects of the related background art.

Therefore, the present invention specifies a construction machine comprising a turning table, a working equipment and an operation cabin. wherein an outer side of said operation cabin is located at an opposite side to a boom of said working equipment installed on said turning table of said construction machine and is formed into an outwardly curved arc including door, said door formed into the outwardly curved arc is provided to be freely slidable and is controlled to be within the turning radius of said turning table along said outer side of said operation cabin when the door is in the opened position; and wherein a plurality of rails are provided on said outer side of said operation cabin (2) and a plurality of rollers (7,8,9) are provided on the inner side of said door which are always engaged with said plurality of rails to permit free sliding of said door.

The rollers provided on the door are engaged with the rails provided at the side of the operation room and therefore the door can be opened or closed along with movement of the rollers in the rails. When the door is in the opened position, the door stays within the turning radius of the turning table and can avoid collisional contact with an external obstacle even when the turning table is turned around.

### Brief Description of the Drawings

Fig. 1 is a plan view of an embodiment of an operation room of a construction machine according to the present invention;
Fig. 2 is a perspective view of the operation room shown in Fig. 2;
Fig. 3 is a perspective view of a door shown in Fig. 1;
Fig. 4 is an illustration of a locus in a plane when the door installed at the operation room shown in Fig. 2 is moved from closing to opening;
Fig. 5 is an illustration of a center rail and a center roller, showing engagement of the operation room and the door according to the present invention;
Fig. 6 is an illustration showing a side view of a hydraulic power shovel according to the related background art;
Fig. 7 is an illustration of a plane showing the problem 1 of the operation room according to the related background art; and
Fig. 8 is an illustration of a plane showing the problem 2 of the operation room according to the related background art.

### Best Modes for Carrying out the Invention

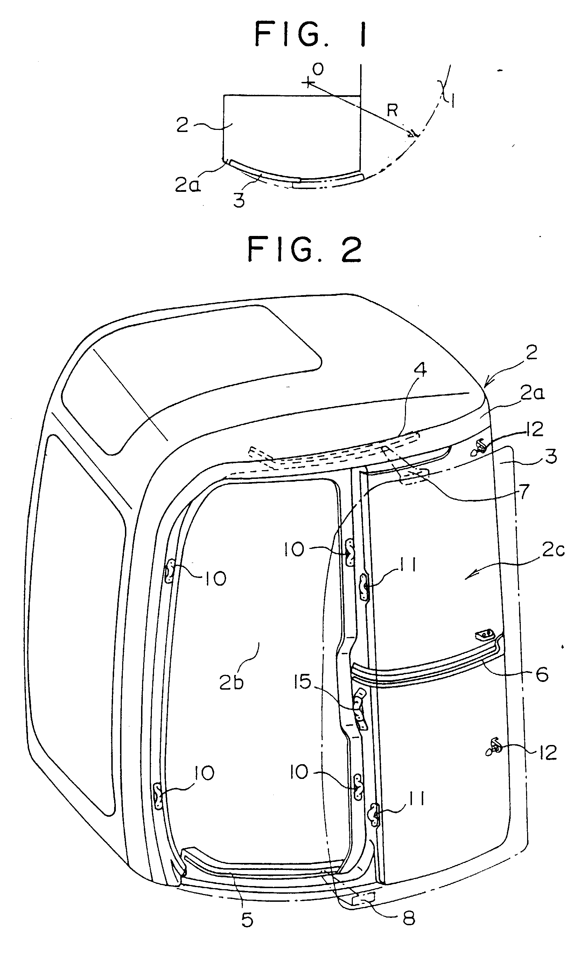

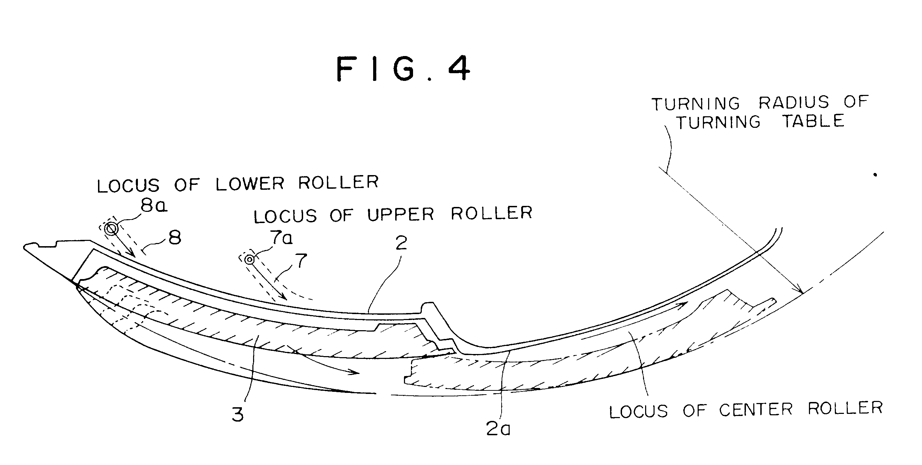

The present invention is described, referring to the embodiments shown in Figs. 1 to 5. The lateral side 2a of the operation room 2 which is located at the opposite side to the boom of the working equipment installed on the turning table 1 shown in the drawings is formed into an outwardly curved arc including the door. An upper rail 4 is installed on the upper part of the inner lateral side 2a of the operation room, a lower rail 5 is installed on the lower part of the inner lateral side and a center rail 6 is installed at the center of the outer side and an upper roller 7, a lower roller 8 and a center roller 9 which is always engaged with the rails to make the door 3 to be freely slidable are provided on the door 3 whereby in the opened position, the door 3 is limited within the turning radius R of the turning table 1 along the outer side of the operation room 2.

The outer side 2a of the operation room is formed as a vertically longer opening 2b which has a larger width than a conventional type (the height is as same as conventional) because the front half of the outer side uses an arc profile to install the door 3 and the rear half is formed as a side wall 2c. An upper rail 4 of a specified length which has a groove type section and is curved in the longitudinal direction is horizontally provided at an upper center of the inner side of the operation room 2 near the ceiling of the outer side 2a and a similar lower rail 5 is provided at a lower part of the inner side so that it is located at a fronter position than the upper rail 4. A groove type center rail 6 is provided at the center of the inner side wall 2c in the horizontal direction. The door 3 is formed in a size larger than the opening 2b and is provided with an upper roller 7 which has a roller 7a at its extreme end for engaging with the groove of the upper rail 4 at the upper center of the its inner side and a lower roller 8 which has a roller 8a for engaging with the groove of the lower rail 5 at the lower front end of its inner side. In addition, a center roller 9 which has a roller 9a for engaging with the groove of the center rail 6 is provided at the rear end of the center of the inner side. Accordingly, the door 3 is installed on the operation cabin by engaging rollers 7a, 8a and 9a with rails 4, 5 and 6 as shown with a 2-dotted broken line in Fig. 2.

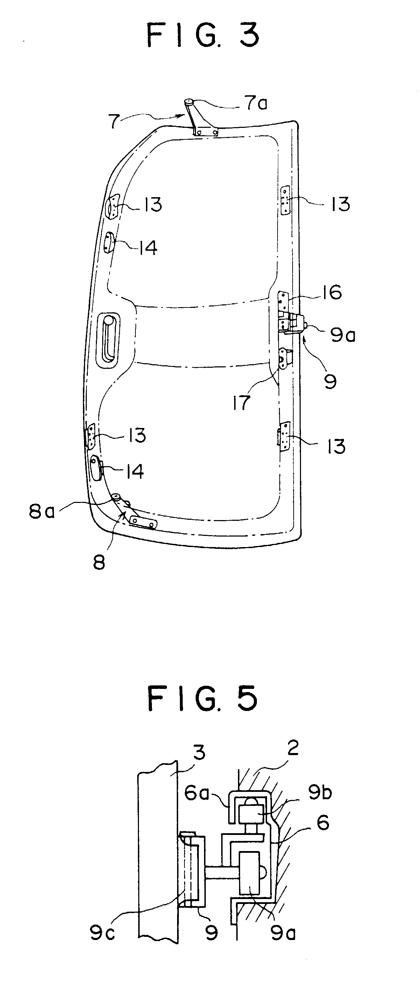

Operation is described below. The door 3 of the operation room 2 is opened and closed along a locus as shown in Fig. 2. Specifically, for closing the door 3, the front edge of the door 3 is gradually aligned with the outer side 2a of the operation room 2 while moving the door 3 in parallel, with the outer side 2a. Accordingly, when the door 3 is in the opened position, the full face of the door 3 is overlapped with the arc surface of the outer side 2a of the operation room 2 and the door 3 is held within the turning radius R as shown. This movement of the door 3 is carried out while being controlled in the horizontal direction when the upper roller 7 is engaged with the upper rail 4, the center roller 9 is engaged with the center rail 6 and the lower roller 8 is engaged with the lower rail 5. Numerals 10 to 15 in Figs. 2 and 3 are respectively an external or internal striker for fixing the door 3 at that position and preventing horizontal movement of the door 3 when the door 3 is closed or opened. The details of mechanical engagements of the rails and rollers can be explained referring to an example of engagement of the center rail 6 and the center roller 9 as shown in Fig. 5. The center rail 6 has a guide 6a and the center roller 9 has a guide roller 9a and a roller 9b to make the roller 9a receive a load during movement of the door 3, and the guide roller 9b is engaged with the guide 6a to prevent the door 3 from coming off from the operation room 2. The center roller 9 rotates around the shaft 9c as a pivot to ensure smooth sliding of the door 3.

### Industrial Applicability

The operation room of a construction machine according to the present invention is useful as an operation room for construction machines, particularly, excavating machines each having a turning table as power shovels.

## Claims

1. A construction machine comprizing a turning table, a working equipment and an operation cabin,
wherein an outer side (2a) of said operation cabin (2) is located at an opposite side to a boom of said working equipment installed on said turning table (1) of said construction machine and is formed into an outwardly curved arc including door (3), said door (3) formed into the outwardly curved arc is provided to be freely slidable and is controlled to be within the turning radius of said turning table (1) along said outer side (2a) of said operation cabin (2) when the door is in the opened position; and
wherein a plurality of rails (4,5,6) are provided on said outer side (2a) of said operation cabin (2) and a plurality of rollers (7,8,9) are provided on the inner side of said door (3) which are always engaged with said plurality of rails (4,5,6) to permit free sliding of said door.

## Patentansprüche

1. Baumaschine, umfassend eine Drehplattform, eine Arbeitsausrüstung und einen Leitstand,
worin ein Außenwandabschnitt (2a) des Leitstandes (2) auf der Gegenseite eines auf der Drehplattform der Baumaschine angebrachten Auslegers der Arbeitsausrüstung angeordnet ist und einschließlich der Tür (3) einen auswärts gekrümmten Bogen bildet, wobei die in den auswärts gekrümmten Bogen geformte Tür (3) frei gleitend ausgelegt ist und so geführt wird, daß sie sich innerhalb des Drehradius der Drehplattform (1) befindet und am Außenwandabschnitt (2a) des Leitstandes (2) anliegt, wenn sich die Tür in der geöffneten Stellung befindet; und
worin am Außenwandabschnitt des Leitstandes (2) eine Anzahl von Schienen (4, 5 und 6) und an der Innenseite der Tür eine Anzahl von Rollen (7, 8 und 9), die sich stets im Eingriff mit der Anzahl Schienen (4, 5 und 6) befinden, vorgesehen sind, um das freie Gleiten der Tür zu gestatten.

## Revendications

1. Engin de chantier comprenant un plateau tournant, un équipement de travail et une cabine de conduite, dans lequel un côté externe (2a) de ladite cabine de conduite (2) est situé à un côté opposé d'une flèche dudit équipement de travail installé sur ledit plateau tournant (1) dudit engin de chantier, et est réalisé selon un arc courbé extérieurement incluant une porte (3) , ladite porte (3) réalisée dans l'arc courbé extérieurement est prévue pour être librement coulissable et est commandée pour être dans le rayon de rotation dudit plateau tournant (1) le long dudit côté externe (2a) de ladite cabine de conduite (2) quand la porte est en position ouverte ; et dans lequel une pluralité de rails (4,5,6) sont prévus sur ledit côté externe (2a) de ladite cabine de conduite (2) et une pluralité de galets (7,8,9) sont prévus sur le côté interne de ladite porte (3) qui sont toujours engagés dans ladite pluralité de rails (4,5,6) pour permettre un libre coulissement de ladite porte.
